# EUROPEAN PATENT APPLICATION

(11) **EP 3 567 835 A1**
(43) Date of publication of application: **13.11.2019**
(21) Application number: 17890525.3
(22) Date of filing: 03.08.2017
(51) Int. Cl.: H04M 1/725

(54) **INTELLIGENT PHOTOGRAPHING METHOD AND APPARATUS, AND INTELLIGENT TERMINAL**

(30) Priority: 04.01.2017 CN 201710004343
(71) Applicant: ZTE Corporation, Shenzhen, Guangdong 518057 (CN)
(72) Inventor: LI, Jing, Shenzhen Guangdong 518057 (CN); ZHU, Yufei, Shenzhen Guangdong 518057 (CN); LI, Fei, Shenzhen Guangdong 518057 (CN)
(74) Representative: Regimbeau
(86) International application number: PCT/CN2017/095769
(87) International publication number: WO 2018/126671

(57) **Abstract**

The present invention relates to an intelligent photographing method and apparatus, and an intelligent terminal, and relates to the technical field of communications, for solving a problem, in the related art that a terminal is difficult to meet requirements on photographing effect in various scenes. The photographing method includes: acquiring environment information of a photographing environment; and selecting a camera according to the environment information to perform photographing.

## Description

### TECHNICAL FIELD

The present invention relates to the technical field of communications and, in particular, to an intelligent photographing method and apparatus, and an intelligent terminal.

### BACKGROUND

At present, smartphones are getting thinner and thinner, and the camera sensor, as a main component of the mobile phones, is also becoming smaller and smaller in volume. However, users have increasing requirements on the function and effect of the camera, which makes it difficult to meet the requirements of users on photographing effect in various scenes.

### SUMMARY

The present invention provides an intelligent photographing method and apparatus, and an intelligent terminal to solve a technical problem in the related art that a terminal is difficult to meet the requirements on photographing effect in various scenes.

In a first aspect, the present invention provides an intelligent photographing method. The method includes: acquiring environment information of a photographing environment; and selecting a camera according to the environment information to perform photographing.

Optionally, the environment information includes illumination information and/or object distance information.

Optionally, the step of acquiring illumination information of a photographing environment includes: acquiring the illumination information of the photographing environment through a color sensor.

Optionally, the illumination information includes ambient brightness and/or ambient color temperature.

Optionally, the step of selecting a camera according to the illumination information to perform photographing includes: in a case where the ambient brightness is less than a first threshold, using an infrared camera to perform photographing; in a case where the ambient brightness is greater than the first threshold and less than a second threshold and where the ambient color temperature is less than a preset color temperature threshold, using a low color temperature camera to perform photographing; in a case where the ambient brightness is greater than the second threshold and less than a third threshold or where the ambient color temperature is greater than the preset color temperature threshold, using a sub-high brightness camera to perform photographing; and in a case where the ambient temperature is greater than the third threshold, using a high brightness camera to perform photographing. The first threshold is less than the second threshold, and the second threshold is less than the third threshold.

Optionally, the step of acquiring object distance information of the photographing environment includes: acquiring a photographing distance of an object relative to a camera through a laser sensor; and the step of selecting a camera according to the environment information to perform photographing includes: in a case where the photographing distance is less than a first distance, using a first aperture camera to perform photographing; and in a case where the photographing distance is greater than the first distance, using a second aperture camera to perform photographing.

In another aspect, the present invention further provides an intelligent photographing apparatus. The apparatus includes an information acquisition unit and a photographing selection unit. The information acquisition unit is configured to acquire environment information of a photographing environment. The photographing selection unit is configured to select a camera according to the environment information acquired by the information acquisition unit to perform photographing.

Optionally, the environment information includes illumination information and/or object distance information.

Optionally, the acquisition of the illumination information of the photographing environment may include: acquiring the illumination information of the photographing environment through a color sensor.

Optionally, the illumination information includes ambient brightness and/or ambient color temperature.

Optionally, the photographing selection unit is configured to: in a case where the ambient brightness is less than a first threshold, use an infrared camera to perform photographing; in a case where the ambient brightness is greater than the first threshold and less than a second threshold and where the ambient color temperature is less than a preset color temperature threshold, use a low color temperature camera to perform photographing; in a case where the ambient brightness is greater than the second threshold and less than a third threshold or where the ambient color temperature is greater than the preset color temperature threshold, use a sub-high brightness camera to perform photographing; and in a case where the ambient temperature is greater than the third threshold, use a high brightness camera to perform photographing. The first threshold is less than the second threshold, and the second threshold is less than the third threshold.

Optionally, the information acquisition unit is configured to acquire a photographing distance of an object relative to a camera through a laser sensor; the photographing selection unit is configured to: in a case where the photographing distance is less than a first distance, use a first aperture camera to perform photographing; and in a case where the photographing distance is greater than the first distance, use a second aperture camera to perform photographing.

In another aspect, the present invention further provides an intelligent terminal including any intelligent photographing apparatus provided in the present invention.

Through the intelligent photographing method and apparatus and the intelligent terminal provided by the embodiment of the present invention, the environment information of the photographing environment may be acquired, and the corresponding camera may be selected according to the environment information to perform photographing, so that the camera selected for photographing can automatically adapt to the photographing scene, thereby effectively improving the photographing effect for different environments.

### BRIEF DESCRIPTION OF DRAWINGS

FIG. 1 is a flowchart of an intelligent photographing method according to an embodiment of the present invention;
FIG. 2 is a schematic diagram of correspondence between illumination information and a to-be-selected camera according to an embodiment of the present invention; and
FIG. 3 is a structural diagram of an intelligent photographing apparatus according to an embodiment of the present invention.

### DETAILED DESCRIPTION

The present invention will be described in detail with reference to the drawings. It is to be understood that specific embodiments described herein are intended to explain the present invention, and not to limit the present invention.

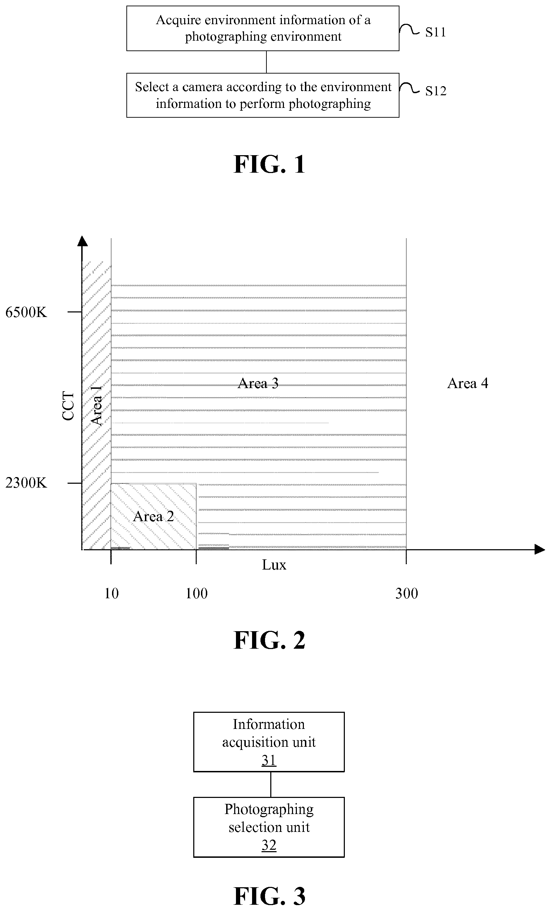

As shown in FIG. 1, an embodiment of the present invention provides an intelligent photographing method. The method includes steps described below.

In step S11, environment information of a photographing environment is acquired.

In step S12, a camera is selected according to the environment information to perform photographing.

In the intelligent photographing method provided by the embodiment of the present invention, the environment information of the photographing environment may be acquired, and the corresponding camera may be selected according to the environment information to perform photographing, so that the camera selected for photographing can automatically adapt to the photographing scene, thereby effectively improving the photographing effect for different environments.

Exemplarily, the environment information acquired in the step S11 may include illumination information and/or object distance information. The illumination information may include at least one of the ambient brightness and the ambient color temperature. Optionally, the illumination information of the photographing environment may be acquired through a color sensor (e.g., a red, green, blue (RGB) sensor). The object distance information refers to the distance between the photographed object and the camera. Optionally, the object distance information may be acquired through a laser sensor.

Exemplarily, after the environment information is acquired, in the step S12, the corresponding camera may be selected according to the environment information to perform photographing. Of course, at least two cameras are required to be configured on the terminal. The camera selection will be described in detail below according to the type of environment information. Optionally, when the environment information includes the illumination information, the camera having different sensitivity degrees to the illumination may be selected to perform photographing in environments under different illumination conditions. For example, in the case of a night environment, an infrared imaging camera may be used. In a case where both the brightness and the color temperature are low, a camera having a good color restoration for red color and being suitable for a scene with a low color temperature may be used. For a dark environment such as indoors, a camera having a slightly better photographic performance may be used to perform photographing. For a sunny outdoor environment, a camera having higher resolution may be used to perform photographing.

For example, in an embodiment of the present invention, the step in which a camera is selected according to the illumination information to perform photographing may include the cases described below.

In a case where the ambient brightness is less than a first threshold, an infrared camera is used to perform photographing.

In a case where the ambient brightness is greater than the first threshold and less than a second threshold, and where the ambient color temperature is less than a preset color temperature threshold, a low color temperature camera is used to perform photographing.

In a case where the ambient brightness is greater than the second threshold and less than a third threshold, or where the ambient color temperature is greater than the preset color temperature threshold, a sub-high brightness camera is used to perform photographing.

In a case where the ambient temperature is greater than the third threshold, a high brightness camera is used to perform photographing.

The first threshold is less than the second threshold, and the second threshold is less than the third threshold.

It should be noted that values of the preset color temperature threshold, the first threshold, the second threshold, and the third threshold may be set as needed. For example, in an embodiment of the present invention, the preset color temperature threshold may be 2300 K (Kelvins), the first threshold may be 10 Lux, the second threshold may be 100 Lux, and the third threshold may be 300 Lux. Based on this, the strategy for camera selection may be represented by FIG. 2. The ordinate CCT is the correlation color temperature and the abscissa Lux is the unit of illuminance.

As shown in FIG. 2, when the brightness is very low, for example, lower than 10 lux which is taken as the limit in the embodiment, an infrared camera is activated to perform photographing. When the color temperature is low, for example, lower than 2300 K which is taken as the limit in the embodiment, and when the brightness is low, with the limit of 100 lux in the embodiment, a camera 2 is activated to perform photographing. When the brightness is between 100 lux and 300 lux, a camera 3 is activated to perform photographing. When a scene has higher brightness, and when the brightness is greater than 300 lux which is taken as the limit in the embodiment, a camera 4 is activated to perform photographing. The camera 1 is an infrared camera, which is suitable for a very dark scene. The camera 2 has a good color restoration for red color and is suitable for a scene with a low color temperature. The camera 3 has good photosensitivity and is suitable for a scene with low brightness. The camera 4 has high resolution and is able to take a more detailed picture in a scene with higher brightness.

It should be noted that the intelligent photographing method is described in detail in the embodiment by taking four cameras as an example, but the present invention is not limited thereto. In other embodiments of the present invention, fewer or more cameras may be provided to be selected for photographing.

Optionally, in another embodiment of the present invention, when information of the photographing environment acquired in the step S11 includes object distance information of the photographing environment, a photographing distance of an object relative to a camera may be acquired through a laser sensor. Base on this, the step S12 in which a camera is selected according to the environment information to perform photographing may include the cases described below.

In a case where the photographing distance is less than a first distance, a first aperture camera is used to perform photographing.

In a case where the photographing distance is greater than the first distance, a second aperture camera is used to perform photographing.

The first distance may be adjusted according to parameters such as aperture and depth of field of the camera, and may be, for example, 1 meter to 3 meters.

The multiple cameras used in the example includes a camera A having a small aperture and a large depth of field, and a camera B having a large aperture and a small depth of field. When a text at a relatively close distance is photographed, if the camera having a larger aperture is used, the problem of unclear edges will occur; and if the camera having a smaller aperture is used, the effect is improved. Conversely, when a distant object is photographed, the camera having a larger aperture may be used to achieve better photographing effects.

In the above embodiment, an appropriate camera is selected according to the illumination information or the object distance information of the photographing environment to perform photographing, but the present invention is not limited thereto. In other embodiments of the present invention, an appropriate camera may also be selected according to both the illumination information and the object distance information. For example, when the text on a book is photographed in a dark indoor environment and if the ambient illumination sensed by the RGB sensor is 260 Lux and the object distance sensed by the laser sensor is 20 cm, the camera having a smaller aperture and being suitable for the dark environment is selected to perform photographing.

Correspondingly, as shown in FIG. 3, an embodiment of the present invention further provides an intelligent photographing apparatus. The apparatus includes an information acquisition unit 31 and a photographing selection unit 32.

The information acquisition unit 31 is configured to acquire environment information of a photographing environment.

The photographing selection unit 32 is configured to select a camera according to the environment information acquired by the information acquisition unit to perform photographing.

For the intelligent photographing apparatus provided in the embodiment of the present invention, the information acquisition unit 31 may acquire the environment information of the photographing environment, and the photographing selection unit 32 may select a corresponding camera according to the environment information to perform photographing, so that the camera selected for photographing can automatically adapt to the photographing scene, thereby effectively improving the photographing effect for different environments.

Optionally, the environment information may include illumination information and/or object distance information.

Optionally, the acquisition of the illumination information of the photographing environment may include: acquiring the illumination information of the photographing environment through a color sensor.

Optionally, the illumination information includes ambient brightness and/or ambient color temperature.

Optionally, the photographing selection unit 32 may be configured to: in a case where the ambient brightness is less than a first threshold, use an infrared camera to perform photographing; in a case where the ambient brightness is greater than the first threshold and less than a second threshold, and where the ambient color temperature is less than a preset color temperature threshold, use a low color temperature camera to perform photographing; in a case where the ambient brightness is greater than the second threshold and less than a third threshold, or where the ambient color temperature is greater than the preset color temperature threshold, use a sub-high brightness camera to perform photographing; and in a case where the ambient temperature is greater than the third threshold, use a high brightness camera to perform photographing. The first threshold is less than the second threshold, and the second threshold is less than the third threshold.

Optionally, the information acquisition unit 31 may be configured to acquire a photographing distance of an object relative to a camera through a laser sensor.

The photographing selection unit 32 may be configured to: in a case where the photographing distance is less than a first distance, use a first aperture camera to perform photographing; and in a case where the photographing distance is greater than the first distance, use a second aperture camera to perform photographing.

Correspondingly, an embodiment of the present invention further provides an intelligent terminal. The intelligent terminal includes at least two cameras and any intelligent photographing apparatus provided in the preceding embodiment, and therefore the corresponding technical effect can also be achieved. Detailed description has been provided above and repetition will not be made herein.

It is to be noted that as used herein, the term "comprising", "including" or any other variant thereof is intended to encompass a non-exclusive inclusion so that a process, method, article or apparatus that includes a series of elements not only includes the expressly listed elements but also includes other elements that are not expressly listed or are inherent to such a process, method, article or apparatus. In the absence of more restrictions, the elements defined by the statement "including a ..." do not exclude the presence of additional identical elements in the process, method, article or apparatus that includes the elements.

From the description of the embodiments described above, it will be apparent to those skilled in the art that the method in the embodiments described above may be implemented by software plus a necessary general-purpose hardware platform, or may of course be implemented by hardware. However, in many cases, the former is a preferred implementation mode. Based on this understanding, the solutions provided by the present invention substantially, or the part contributing to the related art, may be embodied in the form of a software product. The computer software product is stored in a storage medium (such as a read-only memory (ROM)/random access memory (RAM), a magnetic disk or an optical disk) and includes several instructions for enabling a terminal device (which may be a mobile phone, a computer, a server, an air conditioner, a network device, or the like) to execute the method according to each embodiment of the present invention.

The above are only preferred embodiments of the present invention and are not intended to limit the scope of the present invention. Direct or indirect utilization of the specification and drawings of the present invention in equivalent structural variations or equivalent process variations or in the related art without departing from the spirit of the present invention is within the scope of the present invention.

### INDUSTRIAL APPLICABILITY

In the intelligent photographing method provided in the embodiment of the present invention, the environment information of the photographing environment may be acquired, and the corresponding camera may be selected according to the environment information to perform photographing, so that the camera selected for photographing can automatically adapt to the photographing scene, thereby effectively improving the photographing effect of different environments.

## Claims

1. An intelligent photographing method, comprising:
acquiring environment information of a photographing environment; and
selecting a camera according to the environment information to perform photographing.

2. The method of claim 1, wherein the environment information comprises illumination information and/or object distance information.

3. The method of claim 2, wherein acquiring the illumination information of the photographing environment comprises:
acquiring the illumination information of the photographing environment through a color sensor.

4. The method of claim 2, wherein the illumination information comprises ambient brightness and/or ambient color temperature.

5. The method of claim 4, wherein selecting the camera according to the illumination information to perform photographing comprises:
in response to determining that the ambient brightness is less than a first threshold, using an infrared camera to perform photographing;
in response to determining that the ambient brightness is greater than the first threshold and less than a second threshold and that the ambient color temperature is less than a preset color temperature threshold, using a low color temperature camera to perform photographing;
in response to determining that the ambient brightness is greater than the second threshold and less than a third threshold or that the ambient color temperature is greater than the preset color temperature threshold, using a sub-high brightness camera to perform photographing; and
in response to determining that the ambient temperature is greater than the third threshold, using a high brightness camera to perform photographing;
wherein the first threshold is less than the second threshold, and the second threshold is less than the third threshold.

6. The method of claim 2, wherein acquiring the object distance information of the photographing environment comprises:
acquiring a photographing distance of an object relative to a camera through a laser sensor;
wherein selecting the camera according to the environment information to perform photographing comprises:
in response to determining that the photographing distance is less than a first distance, using a first aperture camera to perform photographing; and
in response to determining that the photographing distance is greater than the first distance, using a second aperture camera to perform photographing.

7. An intelligent photographing apparatus, comprising:
an information acquisition unit, which is configured to acquire environment information of a photographing environment; and
a photographing selection unit, which is configured to select a camera according to the environment information acquired by the information acquisition unit to perform photographing.

8. The apparatus of claim 7, wherein the environment information comprises illumination information and/or object distance information.

9. The apparatus of claim 8, wherein the acquisition of the illumination information of the photographing environment comprises:
acquiring the illumination information of the photographing environment through a color sensor.

10. The apparatus of claim 8, wherein the illumination information comprises ambient brightness and/or ambient color temperature.

11. The apparatus of claim 10, wherein the photographing selection unit is configured to:
in response to determining that the ambient brightness is less than a first threshold, use an infrared camera to perform photographing;
in response to determining that the ambient brightness is greater than the first threshold and less than a second threshold and that the ambient color temperature is less than a preset color temperature threshold, use a low color temperature camera to perform photographing;
in response to determining that the ambient brightness is greater than the second threshold and less than a third threshold or that the ambient color temperature is greater than the preset color temperature threshold, use a sub-high brightness camera to perform photographing; and
in response to determining that the ambient temperature is greater than the third threshold, use a high brightness camera to perform photographing;
wherein the first threshold is less than the second threshold, and the second threshold is less than the third threshold.

12. The apparatus of claim 7, wherein the information acquisition unit is configured to acquire a photographing distance of an object relative to a camera through a laser sensor;
wherein the photographing selection unit is configured to:
in response to determining that the photographing distance is less than a first distance, use a first aperture camera to perform photographing; and
in response to determining that the photographing distance is greater than the first distance, use a second aperture camera to perform photographing.

13. An intelligent terminal, comprising at least two cameras and the intelligent photographing apparatus of any one of claims 7 to 12.

14. A storage medium, which is configured to store program codes for executing the intelligent photographing method of any one of claims 1 to 6.
